# EUROPÄISCHE PATENTSCHRIFT

(11) **EP 0 642 616 B1**
(45) Veröffentlichungstag und Bekanntmachung des Hinweises auf die Patenterteilung: **18.12.1996**
(21) Anmeldenummer: 93911741.2
(22) Anmeldetag: 11.05.1993
(51) Int. Cl.: E02F 7/06, E02F 3/40, E02F 5/00, B09B 1/00

(54) **BAGGER ZUM ABSAUGEN LEICHFLÜCHTIGER KONTAMINANTEN AUS GASDURCHLÄSSIGEM MATERIAL**
EXCAVATOR DESIGNED TO DRAW VOLATILE CONTAMINANTS OUT OF GAS-PERMEABLE MATERIAL
EXCAVATEUR VISANT A ASPIRER LES CONTAMINANTS VOLATILS S'ECHAPPANT D'UN MATERIAU PERMEABLE AUX GAZ

(30) Priorität: 02.06.1992 DE 4218108
(43) Veröffentlichungstag der Anmeldung: 15.03.1995
(73) Patentinhaber: Bruckner, Franz, D-69168 Wiesloch (DE)
(72) Erfinder: Bruckner, Franz, D-69168 Wiesloch (DE)
(74) Vertreter: Naumann, Ulrich, Dr.-Ing.
(86) Internationale Anmeldenummer: DE9300412
(87) Internationale Veröffentlichungsnummer: WO9324709

(56) Entgegenhaltungen:
- EP-A- 0 471 363
- DE-A- 3 710 283
- DE-A- 3 734 273
- GB-A- 1 568 423
- US-A- 4 839 061
- WASSER, LUFT UND BODEN Nr. 3, März 1989, MAINZ DE Seiten 56 - 57 , XP74856 'biologisch-physikalische bodenreinigung'

## Beschreibung

Die vorliegende Erfindung betrifft einen Bagger, eine Planierraupe, eine Laderaupe, ein Räumfahrzeug oder dgl., mit einem einen Führerstand aufweisenden Unterwagen, einem an den Unterwagen angelenkten, vorzugsweise mehrteiligen Ausleger und einem vorzugsweise über einen Stiel an den Ausleger angelenkten Werkzeug in Form eines Löffels, Greifers, Schildes oder einer Schaufel und einer über eine Saugleitung mit einer dem Unterwagen bzw. Fahrzeug zugeordneten Absauganlage verbundenen Absaugeinrichtung.

Bagger, Planierraupen, Laderaupen und sonstige Räumfahrzeuge mit Werkzeugen wie beispielsweise einem Löffel, Greifern, einem Schild oder Schaufeln sind seit vielen Jahren aus der Praxis bekannt. Grundsätzlich geht es hier um Fahrzeuge bzw. Maschinen der in Rede stehenden Art mit einem Werkzeug, mit dem Erdreich, Geröll, Schutt oder dgl. im weitesten Sinne bewegbar ist. Der Einfachheit halber sei nachfolgend ausschließlich auf Bagger Bezug genommen, wobei sich die erfindungsgemäße Lehre grundsätzlich auf jedwede Fahrzeuge, Räumfahrzeuge bzw. Maschinen der zuvor genannten Art bezieht.

Bagger sind meist fahrbare Geräte zur Gewinnung, zum Laden und/oder Transportieren von gewachsenem, gesprengtem oder geschüttetem Material, wie z.B. Erd- oder Geröllmassen, Sand, Schlamm, Kies, Kohle, Erz, etc. Sogenannte Hoch-Bagger fördern das Gut von oben nach unten, wogegen sogenannte Tief-Bagger das Fördergut von unten nach oben fördern. Flach-Bagger bewirken eine Verschiebung des Guts auf einer ebenen Fläche und dienen meist zum Planieren. Sogenannte Löffel-Bagger und Schleppschaufel- oder Eimerseil-Bagger werden zu den unstetig arbeitenden Eingefäß-Baggern gerechnet, zumal der Löffel bzw. das Gefäß stets gefüllt und entleert werden muß.

Die Löffel-Bagger besitzen ein Werkzeug, das beim Hochlöffel-Bagger an einem Ausleger so angehoben und abgesenkt werden kann, daß es sich bei der Aufwärtsbewegung mit Baggergut füllt und durch Schwenken und Kippen oder durch eine Bodenklappe im Löffel auf ein Förderband, ein Transportfahrzeug oder eine Halde entleert werden kann. Dagegen kann der Löffel beim Tieflöffel-Bagger so tief abgesenkt werden, daß dieser sich besonders zum Ausheben von Erdgruben eignet.

Die Schleppschaufel- oder Eimerseil-Bagger ziehen an einem Seil ein eimerähnliches Schürfwerkzeug über den Boden und tragen so das Gut ab. Mehrgefäß-Bagger besitzen mehrere Grabwerkzeuge, die auf einer in sich zurückkehrenden Bahn das Abtragegut direkt oder unter Zwischenschaltung eines Stetigförderers zum Transportfahrzeug bringen und einen kontinuierlichen Betrieb ermöglichen. Die hierzu gehörenden Eimerketten-Bagger besitzen an einer endlosen Kette eimerähnliche, mit Schneidmessern versehene Schürfkübel. Die über ein Antriebsrad und ein Umlenkrad geführte Eimerkette trägt mit dem auf dem Boden aufliegenden, gezogenen Trum das Baggergut ab. Die anheb- und absenkbare Eimerleiter ermöglicht je nach ihrer Stellung das Arbeiten mit Hoch- oder Tiefschnitt. Eimerketten-Bagger werden fast immer auf einem Raupenfahrzeug oder auf einer Schiene längs der zu bearbeitenden Böschung im sogenannten Strossenbetrieb verschoben.

Flach-Bagger sind fast immer sogenannte Fahr-Bagger, d.h. sie sind fahrbar. Sie heben zum Planieren mit einem Grabwerkzeug einen dünnen, in etwa 10 bis 20 cm starken Span parallel zur Erdoberfläche ab. Hierzu gehört die mit einem Raupenfahrzeug versehene Planierraupe, der luftbereifte Straßen- oder Erdhobel und der meist geschleppte Schürfwagen.

Die voranstehend erörterten Bagger bzw. Räumfahrzeuge werden u.a. im Zuge von Bau- und Sanierungsmaßnahmen eingesetzt, im Rahmen derer immer häufiger Böden ausgehoben werden müssen. Vor allem im industriellen Bereich weisen die Böden oftmals leichtflüchtige Kontaminanten, beispielsweise Halogenkohlenwasserstoff und entsprechende Verbindungen, auf. Ebenso ist es möglich, daß sich leichtflüchtige Kontaminanten durch mikrobielle Umsetzung gebildet haben. Beim Aushub der Böden bzw. Bodenmassen gelangen je nach Witterung erhebliche Schadstoffe aus dem Erdreich heraus in die Baugrube, auf die Baustelle und gar in die Umgebung einer solchen Baustelle. Dies geschieht durch Emission der leichtflüchtigen Kontaminanten beim Ausgraben bzw. Baggern, Transportieren und Umladen auf Container und LKW's sowie beim Aufschichten von Aufschüttungen bzw. Mieten. Dabei entstehen nicht nur enorme Geruchsbelästigungen in der Umgebung, sondern erhebliche gesundheitliche Beeinflussungen der auf der jeweiligen Baustelle beschäftigten Arbeiter sowie der in der Umgebung wohnenden Personen. Insbesondere Fahrer der in Rede stehenden Bagger bzw. Räumfahrzeuge oder Maschinen sind besonders gefährdet, zumal diese stets in besonderem Maße den Schadstoffen ausgesetzt sind.

Ein vergleichbares Problem tritt bei Aufschüttungen bzw. Mieten auf, die insbesondere für die Zwischenlagerung und zur meist biologischen Sanierung kontaminierten Erdreichs gebildet werden. Um das Eindringen von Niederschlagswässern und das Austreten von Sickerwässern zu verhindern, werden diese Mieten meist auf Folien aufgebracht und auch mit Folien abgedeckt bzw. in Hallen oder Zelten aufgebaut. Dazu muß das kontaminierte Erdreich mit Baggern oder sonstigen Räumfahrzeugen bewegt werden. Dem Problem der leichtflüchtigen Kontaminanten bzw. Substanzen, die aus einer solchen Aufschüttung oder Miete ausgasen können, wurde bislang nach dem Aufschütten keine Bedeutung mehr beigemessen. Insbesondere bei der biologischen Sanierung werden jedoch die Aufschüttungen bzw. Mieten ständig aufgelockert und umgeschichtet, um Sauerstoff in die Aufschüttungen oder Mieten zu bekommen und diese mit Wasser, Nährsalzen, einer entsprechend angepaßten Mikrobiologie, etc. zu versorgen. Bei der reinen Lagerung, aber insbesondere bei den zuvor genannten Arbeiten an den Aufschüttungen oder Mieten, sowie beim Abtrag der Aufschüttungen oder Mieten werden die leichtflüchtigen Kontaminanten bzw. Substanzen, die sich noch im Bodenbereich der Aufschüttungen oder Mieten befinden, bzw. die sich in der Zwischenzeit durch die Mikrobiologie gebildet haben, freigesetzt und können insbesondere beim Bewegen des Erdreichs entweichen.

Im Falle leichtflüchtiger Kontaminanten im Bereich von Baugruben und Aushubstellen hat man sich bislang dadurch geholfen, daß nur bei bestimmten Windrichtungen Aushübe getätigt bzw. Auskofferungsmaßnahmen ergriffen werden. Des weiteren wurden bereits auch schon Teile der jeweiligen Baustelle und der Aushubmassen mit Planen und Folien abgedeckt und den Baggerfahrern auf der Baustelle Fahrzeuge mit geschlossenen und klimatisierten Kabinen zur Verfügung gestellt, wobei die Belüftung dieser Kabinen meist über Aktivkohlefilter geleitete Luft ansaugen. Da jedoch der Fahrer eines Baggers, einer Maschine der in Rede stehenden Art oder eines sonstigen Räumfahrzeugs stets auch Tätigkeiten am Bagger außerhalb der Kabine durchführen muß, ist diese passive Maßnahme zum Schutze des Fahrers nicht hinreichend. Des weiteren ist durch die in Rede stehende Maßnahme zwar der Fahrer während des Fahrens geschützt, jedoch gelangen insbesondere beim Bewegen der Erdmassen durch den Bagger leichtflüchtige Kontaminanten gerade durch das Eingreifen des jeweiligen Werkzeugs, beispielsweise durch das Eingreifen des Löffels, in ganz besonderem Maße in die Luft.

Im Falle der zuvor genannten Aufschüttungen oder Mieten hat man bislang beim Betrieb der Mietenbiologie in Zelten die Zelte abgesaugt, wobei die mit beispielsweise Radladern und Wendegeräten arbeitenden Mitarbeiter auch hier durch geschlossene, mit Klimaanlagen ausgestattete Kabinen geschützt werden.

Die aus der Praxis bereits bekannten Bagger, Planierraupen, Laderaupen, Räumfahrzeuge oder dgl. zum Bewegen von Erdreich bzw. Schüttgut mit leichtflüchtigen Kontaminanten sind jedoch im Hinblick auf die Bedienungspersonen und die Umwelt problematisch, zumal dort - wenn überhaupt - ausschließlich ein passiver Schutz der Bedienungspersonen bzw. des Fahrers vorgesehen ist. Ein wirksamer Schutz der Umwelt, d.h. eine Vermeidung von Verflüchtigungen der die Umwelt belastenden, leichtflüchtigen Substanzen in die Luft beim Baggern bzw. Räumen, ist bei dem bislang bekannten Stand der Technik jedenfalls nicht realisiert.

Aus der DE-A-37 34 273 ist ein Arbeitsfahrzeug mit einer am Fahrzeug angelenkten Schaufel im Sinne eines Frontladers bekannt. An der Schaufel ist eine als Absaugeinrichtung dienende Abdeckung angeordnet. Der Schaufelraum steht mit einem als Absauganlage dienenden Lüfter mit nachgeschaltetem Luftfilter in Verbindung. Zur Herstellung der Verbindung zwischen Absauganlage und Schaufelraum ist ein felxibles Lüftungsrohr an ein Profil der Abdeckung angeschlossen, in dem eine Abdeckplatte geführt wird. Aus dem in der Schaufel befindlichen Erdreich treten leicht flüchtige Verbindungen aus und werden durch die Abdeckplatte quasi wie von einer Dunstabzugshaube aufgefangen und dann dem Saugdruck ausgesetzt. Durch die bekannte Absaugeinrichtung wird demnach ein Absaugen realisiert, bei dem die Abdeckplatte eine passive Sammelfunktion ausübt, nachdem die Kontaminanten aus dem Erdreich bereits ausgetreten sind. Bei dem bekannten Fahrzeug ist die Abdeckung mit der Abdeckplatte an der Außenseite des Werkzeugs angeordnet. Um nun eine wirksame Abführung von leichtflüchtigen Kontaminanten zu erreichen, muß die Abdeckung ausgefahren sein und den Schaufelraum überdecken.

Davon ausgehend liegt der Erfindung die Aufgabe zugrunde, einen Bagger bzw. eine Planierraupe, eine Laderaupe, ein Räumfahrzeug oder dgl. so auszugestalten und weiterzubilden, daß mit einfachen technischen Mitteln eine wirksame Absaugung leichtflüchtiger Kontaminanten beim Bewegen des Erdreichs, Schutts oder dgl., d.h. beim Bewegen des Baggerguts, erfolgen kann, wodurch sowohl Bedienungspersonen bzw. Fahrer als auch die Umwelt wirksam geschützt sind.

Der erfindungsgemäße Bagger bzw. die erfindungsgemäße Planierraupe, Laderaupe oder das erfindungsgemäße Räumfahrzeug löst die voranstehende Aufgabe durch die Merkmale des Patentanspuches 1. Danach ist die Absaugeinrichtung integraler Bestandteil des Werkzeugs und dient zum direkten Absaugen leichtflüchtiger Kontaminanten aus gasdurchlässigem Material, insbesondere aus Erdreich, Geröll, Schutt, etc.

Im Hinblick auf die Ausgestaltung der Absaugeinrichtung ist es von besonderem Vorteil, wenn diese eine zumindest einen Teil der Werkzeuginnenwandung bzw. der Schaufelinnenwandung bildende perforierte Platte aufweist und wenn die die Perforation bildenden Durchgänge in der Platte über einen vorzugsweise rückwärtigen Saugkanal in die zum Unterwagen führende Saugleitung münden. Die Platte selbst könnte als Filter- oder Siebplatte ausgeführt sein, wobei die Perforation in der Platte bzw. die die Perforation bildenden Durchgänge durchaus auch unstetig verteilt sein könnten.

Damit der eigentliche Arbeitszweck des Werkzeugs bzw. des Löffels, der Schaufel oder dgl., nicht durch die perforierte und somit in mechanischer Hinsicht geschwächte Platte negativ beeinflußt wird, ist die Filter- oder Siebplatte in weiter vorteilhafter Weise gegenüber der Werkzeugaußenwandung bzw. dem Werkzeugrahmen durch mindestens eine Stütztraverse versteift, wobei je nach Größe des Werkzeugs bzw. Löffels mehrere Stütztraversen zwischen der Platte und der Werkzeugaußenwandung vorgesehen sein können. Des weiteren ist es insbesondere im Hinblick auf eine einfache und schnelle Austauschbarkeit der perforierten Platte von ganz besonderem Vorteil, wenn die perforierte Platte an den begrenzenden Druckleisten anliegt und von der Arbeitsseite her derart an die Stütztraverse bzw. Stütztraversen geschraubt ist, daß die Platte zwischen die Druckleisten regelrecht eingespannt ist. Dadurch ist einerseits ein sicherer Halt der Platte, andererseits bei hinreichender Eigenelastizität der Platte eine einfache Austauschbarkeit gewährleistet, zumal diese beim Lösen der Schraube aus der Stütztraverse aufgrund einer dann erfolgenden Entspannung und Wölbung von den Druckleisten abhebt und somit einfach entnehmbar ist.

Hinsichtlich einer konkreten Ausgestaltung des Saugkanals ist es von weiterem Vorteil, wenn dieser einen vorzugsweise auf der Rückseite des Werkzeugs ausgebildeten Anschlußstutzen zum Anschluß der Saugleitung aufweist. Dieser Anschlußstutzen könnte beispielsweise mit einem Bajonettanschluß, einer Schelle oder einer besonders gestalteten Manschette versehen sein.

Zur Reinigung des Saugkanals bzw. der in der Platte ausgebildeten Durchgänge ist in weiter vorteilhafter Weise am Saugkanal ein Anschluß zum Rückspülen des Saugkanals durch die Perforation der Platte hindurch vorgesehen. Dabei handelt es sich vorzugsweise um einen Wasseranschluß, so daß der gesamte Saugkanal inklusive der in der Platte vorgesehenen Durchgänge rückspülbar und somit vom Erdreich befreibar ist. Dabei sollte der Strömungspfad durch den Anschlußstutzen und die Saugleitung zum Unterwagen hin absperrbar sein, so daß das unter Druck in den Wasseranschluß geleitete Wasser auch tatsächlich die Durchgänge der Platte vom Erdreich befreit und kein Wasser in die Absauganlage gelangen kann. Ohne weiteres ist es jedoch auch denkbar, daß die Rückspülung mittels Druckluft erfolgt, wobei hier der Wirkungsgrad gegenüber Wasser sicherlich verringert ist.

Im Hinblick auf den zwischen Platte bzw. Perforation der Platte oder der die Perforation bildenden Durchgänge und der Absauganlage gebildeten Strömungspfad ist es von weiterem Vorteil, wenn die Saugleitung über den Ausleger zum Unterwagen bzw. zur Absauganlage geführt wird, zumal eine solche Führung der Saugleitung eine Behinderung der Arbeit des Baggers durch die Saugleitung weitgehend verhindert.

Die Absauganlage selbst könnte als Pumpe bzw. Verdichter ausgeführt sein, wobei hier jegliche Vorrichtungen bzw. Geräte zum Erzeugen eines zumindest geringfügigen Unterdrucks eingesetzt werden können.

Sofern der Unterwagen bzw. das Fahrzeug durch einen Verbrennungsmotor angetrieben wird und sofern es sich bei den leichtflüchtigen Kontaminanten um Aromate, Kohlenwasserstoffe oder dgl. handelt, könnte das abgesaugte Gas mittels der Absauganlage der Zuluft des Verbrennungsmotors zugeführt werden, wodurch einerseits die Verbrennung begünstigt, andererseits eine Reduzierung bzw. zumindest teilweise Entsorgung der Kontaminanten stattfindet.

Grundsätzlich könnte jedoch der Absauganlage eine Filteranlage vorgeschaltet oder nachgeschaltet sein, wobei die Absauganlage das abgesaugte Gas zur Filteranlage bzw. durch diese hindurch fördert. Ebenso könnte die Filteranlage integraler Bestandteil der Absauganlage selbst sein, so daß Filteranlage und Absauganlage eine Einheit bilden.

In der Filteranlage könnte ein vorzugsweise als Aktivkohlefilter ausgeführter Aktivfilter vorgesehen sein. Ebenso könnte es sich bei dem Filter um einen Biofilter handeln. Alternativ dazu könnte die Filteranlage einen Wäscher mit Absorptionsmittel aufweisen, wobei als Absorptionsmittel beispielsweise Wasser oder Öl in Frage kommt. Schließlich könnte die Filteranlage eine Einrichtung zur katalytischen Verbrennung des angesaugten Gases aufweisen, wobei diese Ausgestaltungsmöglichkeit eine Alternative zur Zuführung des abgesaugten Gases zu dem Verbrennungsmotor des Unterwagens bzw. Fahrzeugs darstellt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
- Fig. 1: in schematischer Seitenansicht ein Ausführungsbeispiel eines erfindungsgemäßen Baggers, wobei es sich hier um einen Tieflöffel-Bagger auf Rädern handelt,

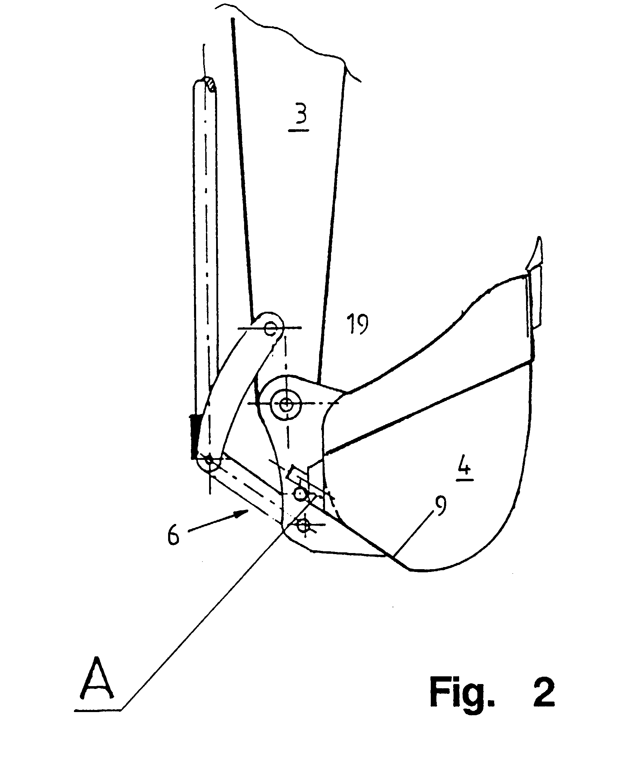

- Fig. 2: in schematischer Darstellung, vergrößert, den Löffel des Baggers aus Fig. 1,

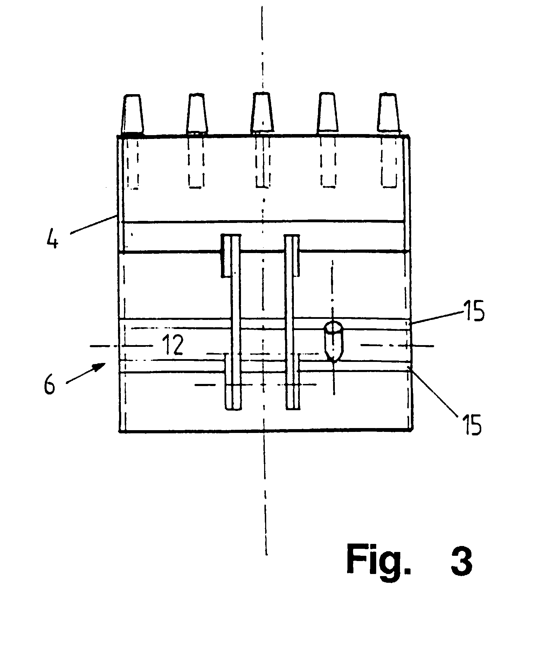

- Fig. 3: den Löffel aus Fig. 2 von der Anlenkungsseite her - ohne Ausleger - und
- Fig. 4: den Löffel aus den Fig. 2 und 3 in einer schematischen Seitenansicht, geschnitten, vergrößert und teilweise, wobei die einzelnen Bauteile der Absaugeinrichtung im Detail dargestellt sind.

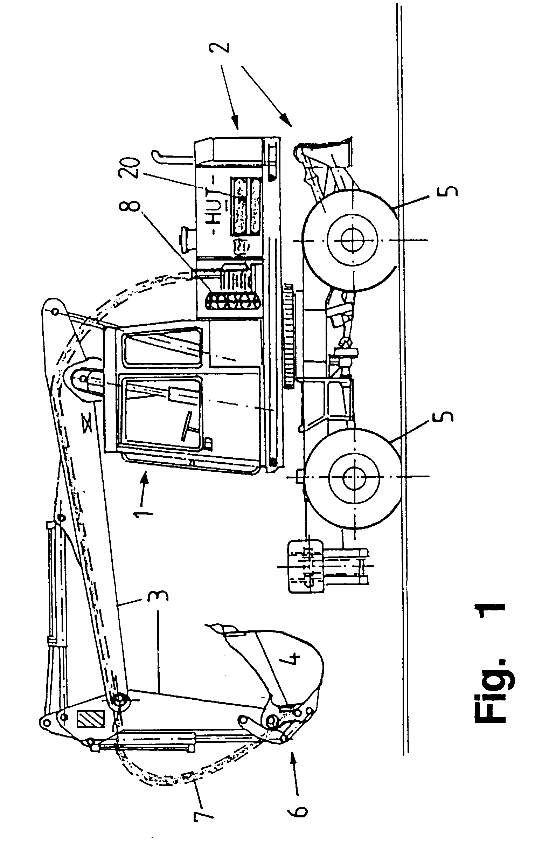

Fig. 1 zeigt einen erfindungsgemäßen Bagger mit einem einen Führerstand 1 aufweisenden Unterwagen 2, einem an dem Unterwagen 2 angelenkten, mehrteiligen Ausleger 3 und einem über einen Stil an den Ausleger 3 angelenkten Werkzeug 4 in Form eines Löffels. Bei dem in den Fig. gewählten Ausführungsbeispiel eines Baggers handelt es sich um einen sogenannten Tieflöffel-Bagger, bei dem sich der Unterwagen 2 bzw. daqs Fahrzeug auf Rädern 5 fortbewegen kann.

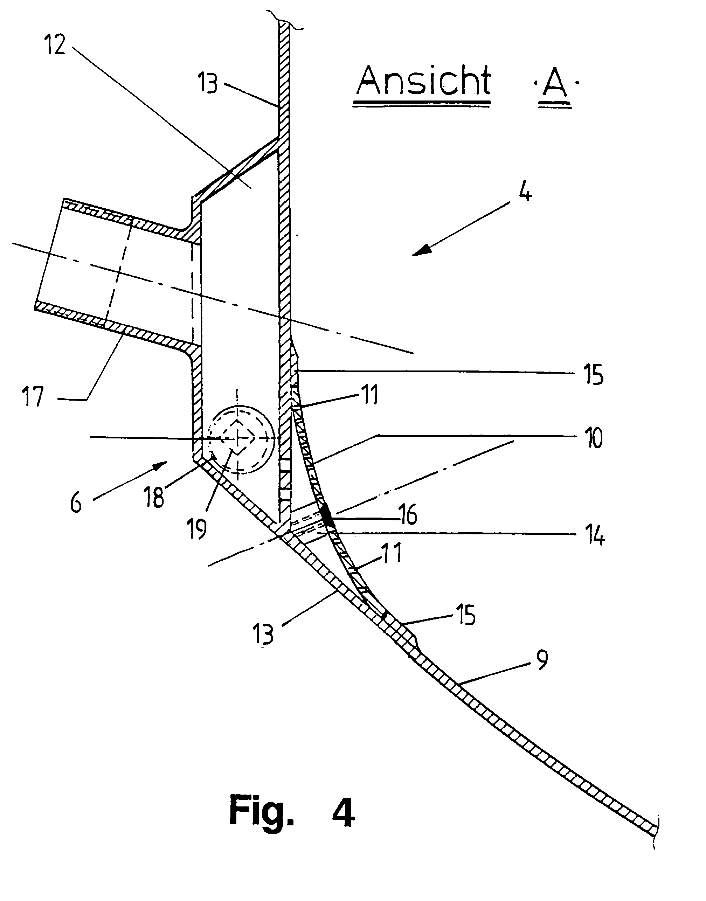

In erfindungsgemäßer Weise weist das Werkzeug bzw. der Löffel 4 eine Absaugeinrichtung 6 zum Absaugen leichtflüchtiger Kontaminanten aus gasdurchlässigem Material, insbesondere aus Erdreich, Geröll, Schutt etc., d.h. aus dem Baggergut, auf. Diese Absaugeinrichtung 6 ist besonders in Fig. 4 - detailliert - dargestellt. Gemäß der Darstellung in Fig. 1 ist die Absaugeinrichtung 6 über eine Saugleitung 7 mit einer dem Unterwagen 2 bzw. Fahrzeug zugeordneten Absauganlage 8 strömungsverbunden.

Die Detaildarstellung in Fig. 4 zeigt deutlich, daß die Absaugeinrichtung 6 eine einen Teil der Werkzeuginnenwandung 9 bildende perforierte Platte 10 aufweist und daß die die Perforation bildenden Durchgänge 11 in der Platte 10 über einen Saugkanal 12 in die Saugleitung 7 münden.

Fig. 4 zeigt des weiteren, daß die Platte 10 gegenüber der Werkzeugaußenwandung bzw. dem Werkzeugrahmen 13 durch eine Stütztraverse 14 versteift ist. Die perforierte Platte 10 liegt an diesen begrenzenden Druckleisten 15 an und ist mittels einer in die Platte 10 eingelassenen Schraube 16 derart an die Stütztraverse 14 geschraubt, daß die Platte 10 zwischen den Druckleisten 15 eingespannt ist.

Der Saugkanal 12 weist einen auf der Rückseite des Werkzeugs 4 ausgebildeten Anschlußstutzen 17 zum Anschluß der Saugleitung 7 auf. Dabei kann die Saugleitung 7 mit jedweden Anschlußmitteln am Anschlußstutzen 17 befestigt sein.

Der Saugkanal 12 weist des weiteren einen Wasseranschluß 18 zum Rückspülen des Saugkanals 12 durch die Perforation der Platte 10 hindurch auf. Der Wasseranschluß 18 ist durch einen Rückspülstopfen 19 verschlossen und wird durch Lösen des Rückspülstopfens 19 zum Rückspülen freigegeben.

Fig. 1 läßt erkennen, daß die Saugleitung 7 über den Ausleger 3 zum Unterwagen 2 bzw. zur Absauganlage 8 geführt ist. Die Absauganlage 8 ist als Pumpe bzw. Verdichter ausgeführt. In besonders vorteilhafter Weise könnte das abgesaugte Gas mittels der Absauganlage 8 der Zuluft des Verbrennungsmotors des Unterwagens 2 zugeführt werden, was bei dem hier gewählten Ausführungsbeispiel nicht der Fall ist.

Der Absauganlage 8 ist eine Filteranlage 20 nachgeschaltet, wobei diese auch ohne weiteres integraler Bestandteil der Absauganlage 8 sein könnte. In der Filteranlage 20 ist ein hier nicht erkennbarer Aktivkohlefilter vorgesehen, wobei auch ohne weiteres ein Biofilter eingesetzt werden könnte. Statt einer herkömmlichen Filteranlage könnte ein Wäscher mit Absorptionsmittel, vorzugsweise mit Wasser oder Öl, vorgesehen sein. Schließlich könnte die Filteranlage 8 eine Einrichtung zur katalytischen Verbrennung des angesaugten Gases aufweisen.

Das voranstehend erörterte Ausführungsbeispiel dient lediglich zum besseren Verständnis der erfindungsgemäßen Lehre, schränkt diese jedoch nicht auf das rein willkürlich gewählte Ausführungsbeispiel ein.

## Patentansprüche

1. Bagger, Planierraupe, Laderaupe, Räumfahrzeug oder dgl., mit einem einen Führerstand (1) aufweisenden Unterwagen (2), einem an den Unterwagen (2) angelenkten, vorzugsweise mehrteiligen Ausleger (3) und einem vorzugsweise über einen Stiel an den Ausleger (3) angelenkten Werkzeug (4) in Form eines Löffels, Greifers, Schildes oder einer Schaufel und einer über eine Saugleitung (7) mit einer dem Unterwagen (2) bzw. Fahrzeug zugeordneten Absauganlage (8) verbundenen Absaugeinrichtung (6),
**dadurch gekennzeichnet,** daß die Absaugeinrichtung (6) integraler Bestandteil des Werkzeugs (4) ist und zum direkten Absaugen leichtflüchtiger Kontaminanten aus gasdurchlässigem Material, insbesondere aus Erdreich, Geröll, Schutt, etc., dient.

2. Bagger nach Anspruch 1, dadurch gekennzeichnet, daß die Absaugeinrichtung (6) eine zumindest einen Teil der Werkzeuginnenwandung (9) bildende perforierte Platte (10) aufweist, die vorzugsweise als Filter- oder Siebplatte ausgeführt ist, und daß die die Perforation bildenden Durchgänge (11) in der Platte (10) über einen Saugkanal (12) in die Saugleitung (7) münden.

3. Bagger nach Anspruch 2, dadurch gekennzeichnet, daß die Platte (10) gegenüber der Werkzeugaußenwandung (13) oder dem Werkzeugrahmen (13) durch mindestens eine Stütztraverse (14) versteift ist und ggf. an begrenzenden Druckleisten (15) anliegt und derart an die Stütztraverse (14) geschraubt ist, daß sie zwischen den Druckleisten (15) eingespannt ist.

4. Bagger nach einem Anspruch 2 oder 3, dadurch gekennzeichnet, daß der Saugkanal (12) einen vorzugsweise auf der Rückseite des Werkzeugs (4) ausgebildeten Anschlußstutzen (17) zum Anschluß der Saugleitung (7) und daß am Saugkanal (12) ggf. ein Wasseranschluß (18) zum Rückspülen des Saugkanals (12) durch die Perforation der Platte (10) hindurch vorgesehen ist.

5. Bagger nach einem der Ansprüche 1 bis 4, dadurch gekennzeichnet, daß die Saugleitung (7) über den Ausleger (3) zum Unterwagen (2) bzw. zur Absauganlage (8) geführt ist und daß die Absauganlage (8) als Pumpe bzw. Verdichter ausgeführt ist.

6. Bagger, wobei der Unterwagen (2) bzw. das Fahrzeug durch einen Verbrennungsmotor angetrieben ist und wobei es sich bei den leichtflüchtigen Kontaminanten um Aromate, Kohlenwasserstoffe oder dgl. handelt, dadurch gekennzeichnet, daß das abgesaugte Gas mittels der Absauganlage (8) der Zuluft des Verbrennungsmotors zugeführt wird.

7. Bagger nach einem der Ansprüche 1 bis 6, dadurch gekennzeichnet, daß der Absauganlage (8) eine Filteranlage (20) vorgeschaltet oder nachgeschaltet ist, wobei die Filteranlage (20) vorzugsweise integraler Bestandteil der Absauganlage (8) ist.

8. Bagger nach Anspruch 7, dadurch gekennzeichnet, daß in der Filteranlage (20) ein vorzugsweise als Aktivkohlefilter ausgeführter Aktivfilter oder ein Biofilter vorgesehen ist.

9. Bagger nach einem der Ansprüche 6 bis 8, dadurch gekennzeichnet, daß in der Filteranlage (20) ein Wäscher mit Absorptionsmittel, vorzugsweise mit Wasser oder Öl, vorgesehen ist.

10. Bagger nach einem der Ansprüche 6 bis 9, dadurch gekennzeichnet, daß die Filteranlage (20) eine Einrichtung zur katalytischen Verbrennung des angesaugten Gases aufweist.

## Claims

1. Excavator, bulldozer, loader, clearing plough or the like, with an undercarriage (2) having a cab (1), a jib (3) which is articulated to the undercarriage (2) and is preferably in several parts and a tool (4) in the form of a shovel, grab, blade or bucket preferably articulated to the jib (3) via a shaft, and an exhaust system (6) connected via a suction pipe (7) to an exhaust unit (8) connected to the undercarriage (2) or vehicle, characterised in that the exhaust system (6) is an integral component of the tool (4) and is used for the direct aspiration of readily volatile contaminants consisting of gas-permeable material, in particular of soil, rubble, debris, etc.

2. Excavator according to claim 1, characterised in that the exhaust system (6) comprises a perforated plate (10) which forms at least part of the internal wall (9) of the tool and is preferably designed as a filter or sieve plate and in that the orifices (11) forming the perforations in the plate (10) open via a suction duct (12) into the suction pipe (7).

3. Excavator according to claim 2, characterised in that the plate (10) is reinforced relative to the external wall (13) of the tool or the tool frame (13) by at least one supporting cross member (14) and optionally rests on limiting pressure pads (15) and is screwed to the supporting cross member (14) in such a way that it is fixed between the pressure pads (15).

4. Excavator according to claim 2 or 3, characterised in that the suction duct (12) has a connecting nozzle (17) preferably formed on the back of the tool (4) for connection of the suction pipe (7) and in that a water connection (18) for backwashing the suction duct (12) through the perforations in the plate (10) is optionally provided on the suction duct (12).

5. Excavator according to one of claims 1 to 4, characterised in that the suction pipe (7) is guided via the jib (3) to the undercarriage (2) or to the exhaust unit (8) and in that the exhaust unit (8) is designed as a pump or compressor.

6. Excavator, wherein the undercarriage (2) or the vehicle is driven by an internal-combustion engine and wherein the readily volatile contaminants are aromatic substances, hydrocarbons or the like, characterised in that the exhausted gas is supplied by means of the exhaust unit (8) to the air supply of the internal-combustion engine.

7. Excavator according to one of claims 1 to 6, characterised in that the exhaust unit (8) is preceded or followed by a filter unit (20), the filter unit (20) preferably being an integral component of the exhaust unit (8).

8. Excavator according to claim (7), characterised in that an active filter preferably designed as an active carbon filter or a biofilter is provided in the filter unit (20).

9. Excavator according to one of claims 6 to 8, characterised in that a washer with absorption agent, preferably with water or oil, is provided in the filter unit (20).

10. Excavator according to one of claims 6 to 9, characterised in that the filter unit (20) comprises a system for the catalytic combustion of the aspirated gas.

## Revendications

1. Excavateur,bulldozer, chargeur chenillé,machine à déblayer ou similaire, avec un châssis porteur (2) présentant un abri de conducteur (2), avec une flèche (3) articulée sur le châssis porteur, flèche de préférence en plusieurs parties, et avec un outil (4) articulé par l'intermédiaire d'un manche sur la flèche (3), outil (4) ayant la forme d'un godet, d'une benne preneuse, d'un bouclier ou d'une pelle et avec un dispositif d'aspiration (6) relié par l'intermédiaire d'une canalisation d'aspiration (7) à une unité d'aspiration associée au châssis porteur (2) ou au véhicule,
caractérisé en ce que le dispositif d'aspiration (6) fait partie intégrante de l'outil et sert à l'aspiration directe de contaminants volatils s'échappant d'un matériau perméable aux gaz, notamment du sous-sol, d'éboulis, de gravats etc.

2. Excavateur suivant la revendication 1, caractérisé en ce que le dispositif d'aspiration (6) présente une plaque perforée (9) constituant au moins une partie de la paroi intérieure (9) de l'outil, plaque qui a de préférence la forme d'une plaque de filtration ou d'un tamis, et en ce que les passages (11) constituant les perforations dans la plaque (10) débouchent par l'intermédiaire d'un canal d'aspiration (12) dans la canalisation d'aspiration (7).

3. Excavateur suivant la revendication 2, caractérisé en ce qu'à l'égard de la paroi extérieure (13) de l'outil ou du châssis (13) de l'outil, la plaque est étayée par au moins une traverse de support (14) et est le cas échéant appliquée sur des tringles de pression de bornage (15), et est vissée de manière telle sur la traverse de support (14) qu'elle est serrée entre les tringles de pression (15).

4. Excavateur suivant la revendication 2 ou la revendication 3, caractérisé en ce que le canal d'aspiration (12) présente un raccord (17) formé de préférence au dos de l'outil (4) pour le raccordement de la canalisation d'aspiration (7) et en ce que sur le canal d'aspiration (12) est le cas échéant prévu un raccord d'eau (18) pour le rinçage du canal d'aspiration au travers les perforations de la plaque (10).

5. Excavateur suivant l'une quelconque des revendications de 1 à 4, caractérisé en ce que la canalisation d'aspiration (7) est guidée sur la flèche (3) vers le châssis porteur (2) ou l'unité d'aspiration (8) et en ce que l'unité d'aspiration (8) a la forme d'une pompe ou d'un compresseur.

6. Excavateur dont lequel le châssis porteur (2) ou le véhicule est entraîné par un moteur à combustion interne et destiné à aspirer des contaminants volatils tels que des aromates, des hydrocarbures ou similaires, caractérisé en ce que le gaz aspiré est à l'aide de l'unité d'aspiration (8) additionné à l'air de combustion du moteur à combustion interne.

7. Excavateur suivant l'une quelconque des revendications de 1 à 6, caractérisé en ce que l'unité d'aspiration (8) est précédée ou suivie d'une unité de filtration (20), l'unité de filtration (20) faisant de préférence partie intégrante de l'unité d'aspiration (8).

8. Excavateur suivant la revendication 7, caractérisé en ce que dans l'unité de filtration (20) est prévu un filtre actif de préférence à charbon actif ou un filtre biologique.

9. Excavateur suivant l'une quelconque des revendications de 6 à 8, caractérisé en ce que dans l'unité de filtration (20) est prévu un laveur à gaz avec des agents d'adsorption, de préférence de l'eau ou de l'huile.

10. Excavateur suivant l'une quelconque des revendications de 6 à 9, caractérisé en ce que l'unité de filtration (20) présente une unité pour la combustion catalytique du gaz aspiré.
